(19) Europäisches Patentamt
European Patent Office
Office européen des brevets

(11) EP 4 796 595 A1

(12) EUROPEAN PATENT APPLICATION
published in accordance with Art. 153(4) EPC

(43) Date of publication:
**26.08.2026 Bulletin 2026/35**

(21) Application number: **25890402.8**

(22) Date of filing: **20.11.2025**

(51) International Patent Classification (IPC):
***C08L 77/00*** (2006.01) ***C08L 77/02*** (2006.01)
***C08K 7/14*** (2006.01) ***C08K 3/22*** (2006.01)
***C08K 3/013*** (2018.01) ***C08L 71/00*** (2006.01)
***C08K 5/06*** (2006.01)

(52) Cooperative Patent Classification (CPC):
**C08K 3/013; C08K 3/22; C08K 5/06; C08K 7/14; C08L 71/00; C08L 77/00; C08L 77/02**

(86) International application number:
**PCT/KR2025/019279**

(87) International publication number:
**WO 2026/116895 (04.06.2026 Gazette 2026/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.11.2024 KR 20240175496**
**25.07.2025 KR 20250101287**

(71) Applicant: **LG Chem, Ltd.**
**Yeongdeungpo-gu**
**Seoul 07336 (KR)**

(72) Inventors:
- **KIM, Hong Jin**
**Seoul 07796 (KR)**
- **KIM, Kyuyoung**
**Seoul 07796 (KR)**
- **KIM, Jae Hwan**
**Seoul 07796 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) POLYAMIDE RESIN COMPOSITION AND MOLDED ARTICLE COMPRISING SAME

(57) An exemplary embodiment of the present disclosure provides a polyamide resin composition including: a polyamide resin including at least one selected from the group consisting of a chemically synthesized polyamide resin and a regenerated polyamide resin; and glass fibers having a tensile modulus of 88 GPa or more, wherein the glass fibers include calcium oxide and magnesia in an amount of 17 wt% to 24 wt% (wherein calcium oxide content is 10 wt% or more, and magnesia content is 10 wt% or less), based on 100 wt% of the glass fibers.



Processed by Luminess, 75001 PARIS (FR)

## Description

[Technical Field]

The present disclosure relates to a polyamide resin composition and a molded article including the same. Specifically, it relates to a polyamide resin composition which has excellent heat resistance and mechanical rigidity and is eco-friendly, and a molded article including the same.

The present application claims the benefit of Korean Patent Application No. 10-2024-0175496 filed on November 29, 2024 and Korean Patent Application No. 10-2025-0101287 filed on July 25, 2025, in the Korean Intellectual Property Office, the entire disclosure of which is incorporated herein by reference.

[Background Art]

Recently, as awareness of environmental protection has spread around the world, the use of regenerated raw materials is increasing rapidly. Particularly, as efforts to efficiently utilize resources and to reduce waste are strengthened, the use of recycled materials is being actively promoted in various industrial fields. In this trend, efforts to increase the recycling and reuse rate of vehicle waste are also being dealt with importantly.

Particularly, in the automobile industry, the use of end-of-life vehicle (ELV) plastics recovered from abandoned vehicles and post-consumer recycled (PCR) plastics recovered after the use of consumers is becoming an essential requirement. This is an important way to realize a resource circulation economy, to reduce carbon emission, and to minimize environmental pollution.

However, as compared to existing chemically synthetized products, recycled raw materials may not maintain uniform quality and may undergo deterioration of physical properties. In particular, in order to increase the content of ELV or/and PCR plastics while maintaining the quality of existing commercial products, a new technical prescription is required to utilize recycled resources to the highest degree without loss of physical properties. This is emerging as an important research and development task, as the development of eco-friendly products in various industries as well as the automobile industry is increasingly in demand currently.

**[Disclosure]**

[Technical Problem]

The present disclosure is directed to providing a polyamide resin composition which has excellent heat resistance and mechanical rigidity while including a recycled polyamide resin, and a molded article including the same.

The problems of the present disclosure are not limited to the above-mentioned problems, and other technical problems not mentioned may be clearly understood by those skilled in the art.

[Technical Solution]

An exemplary embodiment of the present disclosure provides a polyamide resin composition including: a polyamide resin including at least one selected from the group consisting of a chemically synthesized polyamide resin and a regenerated polyamide resin; and glass fibers having a tensile modulus of 88 GPa or more, wherein the glass fibers include calcium oxide and magnesia in an amount of 17 wt% to 24 wt% (wherein calcium oxide content is 10 wt% or more, and magnesia content is 10 wt% or less), based on 100 wt% of the glass fibers.

The polyamide resin may include a chemically synthesized polyamide resin and a regenerated polyamide resin, and the polyamide resin composition may include 5 wt% to 60 wt% of the chemically synthesized polyamide resin and 10 wt% to 80 wt% of the regenerated polyamide resin, based on 100 wt% of the polyamide resin composition.

The regenerated polyamide resin may include at least one selected from the group consisting of: a first regenerated polyamide resin derived from a part of end-of-life vehicle; and a second regenerated polyamide resin derived from at least one selected from the group consisting of a waste fishing net, a waste net, a rope and an air bag.

The regenerated polyamide resin may include a first regenerated polyamide resin containing an inorganic filler, and the first regenerated polyamide resin may be contained in an amount of 1 wt% to 50 wt% based on 100 wt% of the polyamide resin composition.

The inorganic filler may be at least one selected from the group consisting of glass fibers, talc, kaolin, wollastonite and carbon, and the first regenerated polyamide resin may include the inorganic filler in an amount of 27 wt% to 35 wt% based on 100 wt% of the first regenerated polyamide resin.

The polyamide resin composition may further include a heat resistant stabilizer containing two or more types of ether compounds.

The heat resistant stabilizer may be a masterbatch containing the two or more types of ether compounds and a carrier polymer.

The carrier polymer may be a polyamide.

The heat resistant stabilizer may contain a first ether compound having an acid value of 35 mgKOH/g to 40 mgKOH/g, and a second ether compound having an acid value of 1190 mgKOH/g to 1320 mgKOH/g.

The weight ratio of the first ether compound and the second ether compound may be 1:0.5 to 1:5.

The polyamide resin composition may include: 50 wt% to 85 wt% of the polyamide resin; 10 wt% to 45 wt% of the glass fibers; and 1 wt% to 20 wt% of the heat resistant stabilizer, based on 100 wt% of the polyamide resin composition.

The polyamide resin composition may have a tensile strength of 177 MPa or more.

An exemplary embodiment of the present disclosure provides a molded article including the above-described polyamide resin composition.

The molded article may be an automobile part or an electric/electronic component.

The molded article may be a highly heat resistant part for an automobile power train, or an intake manifold.

[Advantageous Effects]

A polyamide resin composition according to an exemplary embodiment of the present disclosure includes a regenerated polyamide resin and thus is eco-friendly. In addition, it is possible to produce a composition and a molded article of resource circulation type.

In addition, a polyamide resin composition according to an exemplary embodiment of the present disclosure or a molded article including the same has excellent welding strength and endurance reliability.

Additionally, a polyamide resin composition according to an exemplary embodiment of the present disclosure or a molded article including the same has excellent heat resistance and mechanical rigidity and prevents whitening.

Additionally, a polyamide resin composition according to an exemplary embodiment of the present disclosure or a molded article including the same has a high maximum burst pressure.

Further, a polyamide resin composition according to an exemplary embodiment of the present disclosure or a molded article including the same shows physical properties equivalent to those of a synthetic resin or higher than those of a synthetic resin, even though it includes a regenerated resin.

The advantageous effects of the exemplary embodiments of the present disclosure are not limited to those described above, and more diverse effects are included in the present specification.

[Best Mode]

Hereinafter, the present disclosure will be explained in detail.

Throughout the present specification, when a part is described to "include" a component, this does not exclude the presence of another component but rather implies that further components may be included, unless the context specifically states otherwise.

Unless otherwise stated specifically in the present specification, the terminology is intended only to refer to specific embodiments and is not intended to limit the present disclosure.

Singular forms used in the present specification also include plural forms unless the phrases clearly indicate the opposite meaning.

In the present specification, "p to q" means a range of p or more and q or less.

When measurement conditions and methods are not specifically described with respect to the physical properties described in the present specification, the physical properties are measured according to measurement conditions and methods generally used by those skilled in the art.

In the present specification, unless otherwise specified, measurement of physical properties is carried out at room temperature under ambient pressure.

In the present disclosure, "room temperature" is a natural temperature free from warming or cooling, and means, for example, any one temperature within a range of about 10°C to about 30°C, for example, about 15°C, about 18°C, about 20°C, about 23°C, or about 25°C. In addition, the unit of temperature is °C, unless otherwise specified in the present disclosure.

In the present disclosure, "ambient pressure" is a natural pressure free from pressurization and decompression, and about 1 atm (about 700 mmHg to 800 mmHg) is generally referred to as ambient pressure.

In the present disclosure, "chemically synthetized" or 'virgin" follows the definition commonly used in the technical field to which the present disclosure pertains, and refers to a petroleum-based polymerized product manufactured by polymerization, unless otherwise specified.

In the present disclosure, "regeneration" or "recycling" follows the definition commonly used in the technical field to which the present disclosure belongs, and refers to a regenerated/recycled product derived from the household waste of

the virgin product or a regenerated/recycled product derived from a part of end-of-life vehicle, unless otherwise specified.

Hereinafter, a polyamide resin composition according to an exemplary embodiment of the present disclosure and a molded article including the same will be explained.

A polyamide resin composition according to an exemplary embodiment of the present disclosure and a molded article including the same can have physical properties equivalent to those of the existing product including a virgin resin alone, even though it includes a regenerated resin. A regenerated resin has already gone through a cycle of use and life, and may undergo significant degradation of physical properties due to moisture absorption and aging (including high temperature environment), as compared to a virgin resin. The polyamide resin composition according to an exemplary embodiment of the present disclosure further includes high-rigidity glass fibers and thus can supplement such a problem.

In an exemplary embodiment of the present disclosure, there is provided a polyamide resin composition including: a polyamide resin including at least one selected from the group consisting of a chemically synthesized polyamide resin and a regenerated polyamide resin; and glass fibers having a tensile modulus of 88 GPa or more, wherein the glass fibers include calcium oxide and magnesia in an amount of 17 wt% to 24 wt% (wherein calcium oxide content is 10 wt% or more, and magnesia content is 10 wt% or less), based on 100 wt% of the glass fibers.

Herein, within the limits consistent with the definition of the present disclosure, polyamide may be one prepared by a method commonly used in the technical field to which the present disclosure belongs to or may be commercially available, and is not particularly limited.

For example, polyamide resin may be at least one selected from the group consisting of polyamide resin 6, polyamide resin 66, polyamide resin 46, polyamide resin 11, polyamide resin 12, polyamide resin 610, polyamide resin 612, polyamide resin 6/66, polyamide resin 6/612, polyamide resin MXD6, polyamide resin 6/MXD6, polyamide resin 66/MXD6, polyamide resin 6T, polyamide resin 6I, polyamide resin 6/6T, polyamide resin 6/6I, polyamide resin 66/6T, polyamide resin 66/6I, polyamide resin 6/6T/6I, polyamide resin 66/6T/6I, polyamide resin 9T, polyamide resin 9I, polyamide resin 6/9T, polyamide resin 6/9I, polyamide resin 66/9T, polyamide resin 6/12/9T, polyamide resin 66/12/9T, polyamide resin 6/12/9I and polyamide resin 66/12/6I, more preferably, may be a homopolymer or copolymer containing at least one selected from polyamide resin 6, polyamide resin 66, polyamide resin 46, polyamide resin 11 and polyamide resin 12, and most preferably, may include polyamide resin 6, and this case provides an effect of excellent heat resistance, molding processability and chemical resistance.

In an exemplary embodiment of the present disclosure, the polyamide resin includes at least one selected from the group consisting of a chemically synthesized polyamide resin and a regenerated polyamide resin.

In an exemplary embodiment of the present disclosure, the polyamide resin includes a chemically synthesized polyamide resin.

In an exemplary embodiment of the present disclosure, the polyamide resin includes a regenerated polyamide resin.

In an exemplary embodiment of the present disclosure, the polyamide resin includes a chemically synthesized polyamide resin and a regenerated polyamide resin.

In an exemplary embodiment of the present disclosure, the polyamide resin includes a regenerated polyamide resin and optionally includes a chemically synthesized polyamide resin.

In an exemplary embodiment of the present disclosure, the chemically synthesized (virgin) polyamide resin may have a relative viscosity (RV) of 2.1 to 2.8, preferably 2.1 to 2.7, and more preferably 2.2 to 2.6, and specifically 2.3 to 2.8. The relative viscosity (RV) may be determined by using a method used conventionally in the art. For example, the relative viscosity may be calculated by taking the resin concentration in 96 wt% sulfuric acid solution as 1.0 w/v% based on sulfuric acid RV according to ISO 307.

The chemically synthesized polyamide resin may be synthesized through a ring-opening polymerization process by using caprolactam ($CH_{11}NO$) as a unit. During this process, the ring of caprolactam is opened, and a long polymer chain is formed while an amide bond is formed. The basic unit of the chemically synthesized polyamide resin includes $[-NH-(CH_2)_5-CO-]_n$.

In the chemically synthesized polyamide resin, amorphous segments occupy a significant proportion, and for example, the proportion of amorphous segments may be 50 wt% to 65 wt%. Since alkyl chain ($CH_2$) portions are relatively soft structures, the chains are not aligned but form amorphous segments. Due to this, it is possible to ensure a polyamide resin composition having an excellent balance between mechanical properties and moldability.

In the present disclosure, "amorphous" is defined as a polymer that produces no crystallization (exothermic) or melting (endothermic) peaks during a differential scanning calorimetric (DSC) test at a temperature ranging from a temperature below the glass transition temperature (Tg) to Tg+300°C. On the contrary, if such peaks are recorded in the DSC test, the polymer materials are crystalline or semi-crystalline polymers. The DSC test is known to those skilled in the art.

In an exemplary embodiment of the present disclosure, the chemically synthesized polyamide resin is contained in an amount of 5 wt% to 60 wt% based on 100 wt% of the polyamide resin composition. Preferably, the chemically synthesized polyamide resin is contained in an amount of 10 wt% to 50 wt%, more preferably 13 wt% to 45 wt%, based on

100 wt% of the polyamide resin composition. Within the above-defined range, the polyamide resin composition allows easy processing while keeping the quality somewhat uniform.

The regenerated polyamide resin is one obtained by regenerating the above-described virgin polyamide resin, and is commercialized by carrying out chemical decomposition (C-PCR (post-consumer recycling)) or mechanical decomposition or pulverization (M-PCR), etc., after collecting end-of-life plastics or end-of-use or expired plastics. The regenerated polyamide resin may be commercially available one.

The regenerated polyamide resin may have non-uniform quality and show variable physical properties, as compared to the chemically synthesized polyamide resin. The regenerated polyamide resin may show lower mechanical performance and durability as compared to the virgin resin, since the purity and molecular structure of the original material is affected by mechanical deterioration, impurity incorporation, additive deterioration, oxidation and moisture absorption in a recycling process.

In an exemplary embodiment of the present disclosure, the polyamide resin includes a regenerated polyamide resin.

In an exemplary embodiment of the present disclosure, the polyamide resin includes a chemically synthesized polyamide resin and a regenerated polyamide resin.

In an exemplary embodiment of the present disclosure, the polyamide resin composition includes: 5 wt% to 60 wt% of the chemically synthesized polyamide resin; 10 wt% to 80 wt% of the regenerated polyamide resin, based on 100 wt% of the polyamide resin composition. Preferably, the polyamide resin composition includes: 10 wt% to 50 wt% of the chemically synthesized polyamide resin; 15 wt% to 70 wt% of the regenerated polyamide resin, based on 100 wt% of the polyamide resin composition. More preferably, the polyamide resin composition includes: 13 wt% to 45 wt% of the chemically synthesized polyamide resin; 20 wt% to 65 wt% of the regenerated polyamide resin, based on 100 wt% of the polyamide resin composition. Within the above-defined range, the polyamide resin composition allows easy processing while keeping the quality somewhat uniform.

In an exemplary embodiment of the present disclosure, the chemically synthesized polyamide resin has a smaller weight than the weight of the regenerated polyamide resin.

In an exemplary embodiment of the present disclosure, the weight of the regenerated polyamide resin is 0.1 to 5 times the weight of the chemically synthesized polyamide resin. Preferably, the weight of the regenerated polyamide resin is 0.5 to 4 times the weight of the chemically synthesized polyamide resin. More preferably, the weight of the regenerated polyamide resin is 1.2 to 3.7 times the weight of the chemically synthesized polyamide resin. Within the above-defined range, the polyamide resin composition allows easy processing while keeping the quality somewhat uniform.

In an exemplary embodiment of the present disclosure, the regenerated polyamide resin has a relative viscosity of 2.40 to 3.20. The amorphous proportion of the regenerated polyamide resin may be larger than the amorphous proportion of the chemically synthesized polyamide resin. In other words, the degree of crystallization of the regenerated polyamide resin may be lower than the degree of crystallization of the chemically synthesized polyamide resin due to deterioration and impurity.

In an exemplary embodiment of the present disclosure, the regenerated polyamide resin may be obtained from various waste materials, such as a part of end-of-life vehicle, a waste fishing net, a waste net, a carpet, an industrial film, a packaging material, a rope, a bag, clothes and an air bag. In the present disclosure, the regenerated polyamide resin may be referred to as a PCR (post-consumer recycled) resin, except a regenerated resin derived from a part of end-of-life vehicle (ELV). The regenerated resin derived from a part of end-of-life vehicle may be referred to as a first regenerated polyamide resin, and the regenerated resin derived from a waste material except a part of end-of-life vehicle may be referred to as a second regenerated polyamide resin.

In an exemplary embodiment of the present disclosure, the regenerated polyamide resin includes a first regenerated polyamide resin containing an inorganic filler. The first regenerated polyamide resin is derived from a part of end-of-life vehicle and may include a reinforcing material or a filler contained in the part of vehicle. The first regenerated polyamide resin may have relatively stable quality as compared to the other PCR resins, since the source of the raw material thereof is identified. The inorganic filler may include glass fibers, talc, kaolin, wollastonite, mica, carbon, or the like, but is not limited thereto. For example, the first regenerated polyamide resin includes glass fibers as an inorganic filler. The glass fibers contained as an inorganic filler of the first regenerated polyamide resin may be differentiated from the high-rigidity glass fibers of the polyamide resin composition.

In an exemplary embodiment of the present disclosure, the first regenerated polyamide resin includes the inorganic filler in an amount of 25 wt% to 40 wt% based on 100 wt% of the first regenerated polyamide resin. Preferably, the first regenerated polyamide resin includes the inorganic filler in an amount of 27 wt% to 35 wt%. The first regenerated polyamide resin used as a part of vehicle includes an inorganic filler in order to reinforce the rigidity of a chemically synthesized polyamide resin.

In an exemplary embodiment of the present disclosure, the first regenerated polyamide resin is contained in an amount of 1 wt% to 50 wt% based on 100 wt% of the polyamide resin composition. Preferably, the first regenerated polyamide resin is contained in an amount of 5 wt% to 40 wt%, more preferably 7 wt% to 30 wt%, based on 100 wt% of the

polyamide resin composition. Within the above-defined range, the polyamide resin composition can keep the quality somewhat uniform.

In an exemplary embodiment of the present disclosure, the first regenerated polyamide resin is contained in an amount of 10 wt% or more, based on 100 wt% of the regenerated polyamide resin. Preferably, the first regenerated polyamide resin is contained in an amount of 10 wt% to 80 wt%, more preferably 15 wt% to 60 wt%, based on 100 wt% of the regenerated polyamide resin. Within the above-defined range, the polyamide resin composition can keep the quality somewhat uniform.

In an exemplary embodiment of the present disclosure, the regenerated polyamide resin includes a second regenerated polyamide resin, which is a PCR (post-consumer recycled) resin. The second regenerated polyamide resin may be in good supply and economical as compared to the first regenerated polyamide resin. For example, the second regenerated polyamide resin is derived from at least one selected from a group consisting of a waste fishing net, a waste net, a rope and an air bag.

In an exemplary embodiment of the present disclosure, the second regenerated polyamide resin includes no inorganic filler, or includes an inorganic filler in an amount of 1 wt% or less, based on 100 wt% of the second regenerated polyamide resin.

In an exemplary embodiment of the present disclosure, the regenerated polyamide resin may include the first regenerated polyamide resin in combination with the second regenerated polyamide resin, or may include the second regenerated polyamide resin alone.

When the regenerated polyamide resin includes the first regenerated polyamide resin in combination with the second regenerated polyamide resin, the weight ratio of the first regenerated polyamide resin and the second regenerated polyamide resin is 10:90 to 70:30, preferably 15:85 to 60:40.

In an exemplary embodiment of the present disclosure, the glass fibers have high rigidity as determined from its tensile modulus of 88 GPa or more. The glass fibers can improve the mechanical properties and heat resistance of the polyamide resin composition.

In an exemplary embodiment of the present disclosure, the glass fibers have a tensile modulus of 88 GPa to 92 GPa. The tensile modulus is determined for 17 μm-2400 tex roving strand according to ASTM D2343.

Any conventional glass-based fibers known in the art may be used as the glass fibers with no particular limitation. Nonlimiting examples of the glass fibers include E-glass fibers, A-glass fibers, C-glass fibers, D-glass fibers, R-glass fibers, S-glass fibers, E-glass fiber derivatives, or the like. The glass fibers may have a circular section or a non-circular section, or an elliptical section, or may have a flat section, including a non-circular type, such as an atypical section. Such glass fibers may be used alone or in combination.

The circular section refers to a cross-section showing a circular shape and having a ratio of main sectional axis to secondary sectional axis of 1 or approximately 1, but is not limited thereto. The elliptical section refers to a cross-section showing an elliptical shape and having a ratio of main sectional axis to secondary sectional axis of 2:6, 3:6 or 3.5:5.0, but is not limited thereto. The atypical section refers to a cross-section not showing a circular shape or an elliptical shape, but is not limited thereto.

For example, the glass fibers may have an aspect ratio, defined as a ratio (L/D) of length (L) based on diameter (D) of 1:1 to 1:4, specifically 1:1 to 1:3, more specifically 1:1.

In the present disclosure, the diameter and length may be determined by using a scanning electron microscope (SEM). Specifically, 20 glass fiber strands are selected by using a scanning electron microscope, and the diameter and length of each strand are measured by using an icon bar capable of measuring a diameter, and the arithmetic mean is calculated therefrom to obtain the average diameter and average length.

In an exemplary embodiment of the present disclosure, the glass fibers may have a diameter (D) of 6 μm to 16 μm, preferably have an average diameter of 7 μm to 11 μm, and more preferably have an average diameter of 10 μm to 11 μm. Within the above-defined range, it is possible to mold a polyamide resin composition with improved processability and to provide an effect of improving the tensile strength of a molded article manufactured from the polyamide resin composition.

In an exemplary embodiment of the present disclosure, the glass fibers include at least one selected from the group consisting of silica, alumina, calcium oxide, magnesia, titanium dioxide, sodium oxide, potassium oxide and iron oxide.

In an exemplary embodiment of the present disclosure, the glass fibers include silica, alumina, calcium oxide, magnesia, titanium dioxide, sodium oxide, potassium oxide and iron oxide.

In an exemplary embodiment of the present disclosure, the glass fibers include calcium oxide and magnesia. Calcium oxide reduces the melting point of the glass fibers and increases the flexibility thereof, thereby improving the processability. Magnesia reinforces the mechanical performance and chemical resistance.

In an exemplary embodiment of the present disclosure, the content of calcium oxide contained in the glass fibers is similar to or larger than the content of magnesia. For example, the glass fibers include calcium oxide and magnesia in an amount of 17 wt% to 24 wt% based on 100 wt% of the glass fibers. Herein, the content of calcium oxide is 10 wt% or more,

and that of magnesia is 10 wt% or less. In this case, it is possible to ensure a polyamide resin composition having a good balance of processability, specific gravity, mechanical physical properties and heat resistance.

In an exemplary embodiment of the present disclosure, the glass fiber are boron-free glass fibers containing no boron.

In an exemplary embodiment of the present disclosure, the glass fibers include, based on 100 wt% of the glass fibers:

50 wt% to 80 wt% of silica,
5 wt% to 25 wt% of alumina,
10 wt% to 30 wt% of calcium oxide and magnesia,
0.1 wt% to 5 wt% of titanium dioxide, and
0.1 wt% to 5 wt% of sodium oxide, potassium oxide and iron oxide.

In an exemplary embodiment of the present disclosure, the glass fibers include, based on 100 wt% of the glass fibers:

57 wt% to 70 wt% of silica,
10 wt% to 20 wt% of alumina,
15 wt% to 25 wt% of calcium oxide and magnesia,
0.5 wt% to 3 wt% of titanium dioxide, and
0.5 wt% to 3 wt% of sodium oxide, potassium oxide and iron oxide.

In an exemplary embodiment of the present disclosure, the glass fibers include, based on 100 wt% of the glass fibers:

58 wt% to 62 wt% of silica,
14 wt% to 18 wt% of alumina,
17 wt% to 24 wt% of calcium oxide and magnesia,
0.5 wt% to 2 wt% of titanium dioxide, and
1.3 wt% or less of sodium oxide, potassium oxide and iron oxide.

In an exemplary embodiment of the present disclosure, the polyamide resin composition further includes a heat resistant stabilizer. The heat resistant stabilizer may be applied in the form of a masterbatch, and the polyamide resin composition shows heat resistance at a high temperature of 180°C or higher. In addition, the heat resistant stabilizer prevents a whitening phenomenon under the condition of vehicle test and use environment.

In an exemplary embodiment of the present disclosure, the heat resistant stabilizer includes two or more types of ether compounds.

In an exemplary embodiment of the present disclosure, the heat resistant stabilizer includes a first ether compound and a second ether compound, which are different from each other.

The first ether compound may be a polymer containing a soft ether chain end-capped with a hydroxyl group (-OH). When using the first ether compound together with a polyamide resin, they cause various interactions at the interface. The terminal -OH group of the first ether compound can form hydrogen bonding with the amide group (-CONH-) of the polyamide resin, thereby enhancing the interfacial binding force and softness. In addition, both the first ether compound and the second ether compound have a hydroxyl group (-OH), and hydrogen bonding can be formed between the ether compounds and dispersive interaction can be performed. Such increased interfacial binding and softness can prevent a molded article from whitening at the outer surface layer and inner part and can impart a positive effect upon the damping property of a molded article. Under an ultrasonic wave vibration-applying environment, energy can be absorbed and transferred with ease by virtue of the first ether compound, and the response to the vibration energy during ultrasonic welding can be improved significantly. In addition, the molded article can have increased impact resistance and improved elongation at break by virtue of the first ether compound.

In addition, the second ether compound can improve the heat resistance of the polyamide resin composition together with the above-described first ether compound. The second ether compound may be a high-functional polyhydric alcohol compound having a plurality of hydroxyl groups (-OH). Since the polyamide resin contains an amine group ($-NH_2$) and a carboxyl group (-COOH) at the end thereof, a strong hydrogen bonding network can be formed between the terminal group of polyamide and -OH group of the second ether compound. Such a hydrogen bonding network significantly increases the interfacial physical adhesion and provides a rigid binding structure inside of a molded article. This results in improvement of long-term heat resistance and durability. Finally, it is possible to realize a molded article having excellent mechanical properties and durability.

In an exemplary embodiment of the present disclosure, the heat resistant stabilizer includes: a first ether compound having an acid value of 35 mgKOH/g to 40 mgKOH/g; and a second ether compound having an acid value of 1190 mgKOH/g to 1320 mgKOH/g. The first ether compound has a relatively lower acid value to provide softness, and the second ether compound has a relatively higher acid value to increase crosslinking density and to reinforce heat resistance.

The acid value (OH value) is not particularly limited, as long as it is a value determined by a method used conventionally in the art. For example, the acid value may be determined by a standard method, such as ASTM D4274, ASTM D1899, ASTM D1957, ASTM D6321, ASTM D974 or ISO 660.

When the first ether compound has an acid value of higher than 40 mgKOH/g, the corresponding ether compound cannot sufficiently seep to the surface, and thus it is not possible to improve a whitening phenomenon. Therefore, the first ether compound preferably has an acid value of 35 mgKOH/g to 40 mgKOH/g. In this case, it is also possible to improve the thermal bonding force among the components forming the polyamide resin composition preferably.

In an exemplary embodiment of the present disclosure, the first ether compound is poly(tetramethylene ether) glycol. The first ether compound may be one prepared according to a method conventionally used in the art or commercially available one, such as PTMG3000 or PTMG2000, within the limits consistent with the definition of the present disclosure.

In an exemplary embodiment of the present disclosure, the first ether compound may have a weight average molecular weight of 1500 g/mol to 4000 g/mol, preferably 2500 g/mol to 3500 g/mol. Within the above-defined range, the first ether compound can have flowability by which it can migrate to the surface.

In an exemplary embodiment of the present disclosure, the second ether compound is dipentaerythritol.

In an exemplary embodiment of the present disclosure, the weight ratio of the first ether compound and the second ether compound is 1:0.5 to 1:5, preferably 1:0.7 to 1:3, and more preferably 1:1 to 1:2.5. Within the above-defined range, the first ether compound prevents the polyamide resin composition from whitening at the surface, while realizing suitable mechanical rigidity. The content of the second ether compound may vary with the average molecular weight (MW) of the first ether compound.

In an exemplary embodiment of the present disclosure, the heat resistant stabilizer is a masterbatch containing two or more types of ether compounds and a carrier polymer. Specifically, it is a type of masterbatch processed by using two or more types of ether compounds and a carrier polymer.

The carrier polymer of the heat resistant stabilizer is not particularly limited, as long as it is compatible with the polyamide resin composition used for manufacturing a finished product. Particular examples of the carrier polymer include polyethylene, polypropylene, polystyrene, polycarbonate, polyester or polyamide, but are not limited thereto. For example, the carrier polymer is preferably polyamide 6 considering that the main chain of the polyamide resin composition is polyamide 6.

The heat resistant stabilizer is not limited to a type of masterbatch. Each of the first ether compound, the second ether compound and polyamide may be introduced individually to the polyamide resin composition.

In an exemplary embodiment of the present disclosure, the heat resistant stabilizer includes, based on 100 wt% of the heat resistant stabilizer:

50 wt% to 90 wt% of the carrier polymer,
5 wt% to 20 wt% of the first ether compound, and
5 wt% to 45 wt% of the second ether compound.

In an exemplary embodiment of the present disclosure, the heat resistant stabilizer includes, based on 100 wt% of the heat resistant stabilizer:

65 wt% to 80 wt% of the carrier polymer,
7 wt% to 15 wt% of the first ether compound, and
10 wt% to 30 wt% of the second ether compound.

In an exemplary embodiment of the present disclosure, the heat resistant stabilizer includes, based on 100 wt% of the heat resistant stabilizer:

65 wt% to 80 wt% of the carrier polymer,
7 wt% to 13 wt% of the first ether compound, and
10 wt% to 20 wt% of the second ether compound.

In an exemplary embodiment of the present disclosure, the polyamide resin composition further includes an additive. The additive may be at least one selected from a lubricant and a heat stabilizer. In this case, there is provided an effect of realizing desired physical properties properly while not causing degradation of the natural physical properties of

the polyamide resin composition.

In an exemplary embodiment of the present disclosure, the lubricant may be lignite-derived mineral wax or olefin-based wax and functions to allow the polyamide resin composition to keep excellent release property and injection property.

The olefin-based wax may be a polymer having a low melting viscosity and may be an oily solid having slippage property and plasticity. For example, the olefin-based wax may be at least one selected from polyethylene wax and polypropylene wax and may be commercially available one.

The mineral wax shows a high melting point and high hardness and has heat stability, may be at least one selected from OP and E grades, and a commercially available product may be used without departing from the definition according to the present disclosure.

In an exemplary embodiment of the present disclosure, various known types of heat stabilizers may be used as long as they do not adversely affect the polyamide resin composition.

In an exemplary embodiment of the present disclosure, the heat stabilizer may include a metallic compound, which may be at least one selected from copper-based compounds and potassium-based compounds. In this case, there is provided an effect of realizing excellent heat resistance retention and discoloration resistance.

The copper-based compound may be exemplified by CuI, or the like, and the potassium-based compound may be exemplified by at least one selected from the group consisting of KI, KBr, or the like.

In an exemplary embodiment of the present disclosure, the additive may be contained in an amount of 5 wt% or less, 0.05 wt% to 3 wt%, preferably 0.01 wt% to 2 wt%, based on 100 wt% of the polyamide resin composition. When the above-defined range is satisfied, it is possible to provide excellent release property and injection property sufficiently.

In addition to this, the additive may further include a processing aid, a pigment, a colorant, etc. if necessary.

In an exemplary embodiment of the present disclosure, the polyamide resin composition includes, based on 100 wt% of the polyamide resin composition:

50 wt% to 85 wt% of the polyamide resin;
10 wt% to 45 wt% of the glass fibers; and
1 wt% to 20 wt% of the heat resistant stabilizer.

In an exemplary embodiment of the present disclosure, the polyamide resin composition includes, based on 100 wt% of the polyamide resin composition:

60 wt% to 80 wt% of the polyamide resin;
20 wt% to 40 wt% of the glass fibers; and
3 wt% to 15 wt% of the heat resistant stabilizer.

In an exemplary embodiment of the present disclosure, the polyamide resin composition includes, based on 100 wt% of the polyamide resin composition:

60 wt% to 70 wt% of the polyamide resin;
20 wt% to 35 wt% of the glass fibers; and
3 wt% to 12 wt% of the heat resistant stabilizer.

In an exemplary embodiment of the present disclosure, there is provided a method for preparing the above-described polyamide resin composition.

The polyamide resin composition according to the present disclosure may be prepared by a method known in the art. For example, the polyamide resin composition may be prepared in the form of pellets by a method of melt extruding a mixture of each of the components and other additives in an extruder, and the pellets may be used for an injection molded or extrusion molded article.

The method for preparing the polyamide resin composition shares all technical characteristics of the polyamide resin composition described above. Therefore, the description of the overlapping portions will be omitted.

In an exemplary embodiment of the present disclosure, the pellets are extruded at a temperature of 250°C to 280°C, wherein the temperature means one set at a cylinder.

The extrusion kneader is not particularly limited, as long as it is one used conventionally in the art, and preferably, it may be a twin screw extrusion kneader.

During the injection, the mold temperature preferably ranges from 60°C to 120°C, preferably from 80°C to 100°C.

For example, the injection process may be carried out by using an injector in which the hopper temperature or the nozzle temperature is set individually at 255°C to 275°C.

The polyamide resin composition may have a tensile strength of 177 MPa or more as determined according to the

standard test ISO 527. For example, the polyamide resin composition has a tensile strength of 177 MPa to 200 MPa. The polyamide resin composition having a high tensile strength may show high strength even in carrying out welding or fusion.

The strength of the polyamide resin composition may directly affect welding strength, when the welding strength is optimized. In general, a polyamide resin having a high strength shows high yield strength and high fracture strength, and thus a welded portion subjected to welding can also endure a higher load. By virtue of this, the higher the mechanical strength of the resin itself, the higher the welding strength. Therefore, the polyamide resin composition according to the present disclosure can ensure strength by which even a welding portion endures a high load based on its excellent mechanical strength, which significantly contributes to the improvement of the durability and reliability of a finished product.

In an exemplary embodiment of the present disclosure, the polyamide resin composition shows a tensile strength retention (residual rate) before and after aging of 84% or more. Herein, the tensile strength retention before and after aging is calculated according to the following Mathematical Formula 1 after measuring the tensile strength of a specimen before and after it is aged at 180°C for 1000 hours based on ISO 527:

Tensile strength retention before and after aging (%) = [Tensile strength after aging / Tensile strength before aging] X 100 [Mathematical Formula 1]

When measuring the tensile strength based on ISO 527, the specimen has a dimension of a thickness of 4 mm, a width of 10 mm and a length of 170 mm (according to ISO 527-2 Type 1A).

The polyamide resin composition according to an exemplary embodiment of the present disclosure can have a high impact strength. The impact strength is determined by using a specimen with a dimension of 80 mm x 10 mm x 4 mm according to TYPE A of ISO 180 (Plastics - Determination of Izod impact strength).

In an exemplary embodiment of the present disclosure, there is provided a molded article including the above-described polyamide resin composition. The molded article may be processed from the pellets prepared by using the above-described polyamide resin composition.

The molded article may be a product for use in applications requiring all of rigidity, impact resistance and heat resistance. The molded article may be an automobile part or an electric/electronic component. For example, the molded article may be a highly heat resistant part of an automotive power transmission system (power train) component, an engine cover, an intercooler, an intake manifold, or the like. In this case, there is provided an advantage in that the molded article can be provided with quality equal to or higher than the quality required in the market by virtue of the polyamide resin composition.

The molded article can show excellent physical properties even after welding or fusion. When the composition and the molded article according to an exemplary embodiment of the present disclosure is subjected to welding or fusion, the welded or fused portion shows excellent tensile strength, impact strength and/or heat resistance. In addition, the composition and the molded article according to an exemplary embodiment of the present disclosure has a high maximum burst pressure. Therefore, it is possible to realize excellent pressure resistance by which no fluid leakage occurs inside of the molded article.

The welding may be ultrasonic welding, and two planar specimens each having a dimension of 40 mm x 80 mm x 3 mm may be welded under the condition set at a welding pressure of 1 bar, an amplitude of 1.5 mm and a welding depth of 1.0 mm, thereby providing a welded specimen. The tensile strength before welding is determined according to the standard test of ISO 527. The welding strength after welding may be determined by drawing the welded specimen by using a universal testing machine (UTM) under the condition of a speed of 5 mm/min, a welding area of 120 $mm^2$, a load cell capacity of 5 kN or more, a test temperature of $23\pm2$°C and a humidity of 50% RH.

In addition, in describing the polyamide resin composition and molded article of the present disclosure, other conditions or equipment not explicitly described can be appropriately selected within the scope conventionally implemented in the art, and are not particularly limited.

[Mode for Invention]

Hereinafter, the present disclosure is described in detail through examples. However, the examples according to the present disclosure may be changed into several different forms, and the scope of the present disclosure is not to be interpreted as being limited to the examples described below. The examples of the present specification are provided to describe the present disclosure more fully to those having ordinary knowledge in the art.

<Preparation Examples>

The compositions according to Examples and Comparative Examples were prepared as shown in the following

Table 1. Herein, each of the components is the same as described hereinafter, and each number in the compositions of Table 1 refers to wt%.

* PA6-V (virgin polyamide 6): amorphous segment 50 to 60 wt%, Tm 215 to 225°C, relative viscosity (RV) 2.2 to 2.5
* PA6-R2 (recycled polyamide 6 derived from a waste net and a waste fishing net), containing 1% or less of inorganic filler, relative viscosity (RV) 2.40 to 3.20
* PA6-R1 (recycled polyamide 6 derived from a part of end-of-life vehicle), containing 27 to 35 wt% of inorganic filler (glass fibers)
* GF1 (high-rigidity glass fibers): glass fibers having a tensile strength of 88 to 92 GPa as determined for 17 μm-2400 tex roving strand according to ASTM D2343 and showing an aspect ratio of 1:1 (L/D, D: 10 μm)

GF1 (high-rigidity glass fibers) includes, based on 100 wt% of GF1, 58 to 62 wt% of silica, 14 to 18 wt% of alumina, 17 to 24 wt% of calcium oxide + magnesia (wherein calcium oxide content is 10 wt% or more, and magnesia content is 10 wt% or less), 0.5 to 2 wt% of titanium dioxide and 1.3 wt% or less of the balance. Herein, the balance includes sodium oxide, potassium oxide and iron oxide.

* GF2: A commercially available product having a tensile strength of 83 GPa is used. GF2 includes, based on 100 wt% of GF2, 57 to 61 wt% of silica, 11 to 15 wt% of alumina, 22 to 29 wt% of calcium oxide + magnesia (wherein calcium oxide content is 20 wt% or more, and magnesia content is 5 wt% or less), 1.0 wt% or less of titanium dioxide, and 1.3 wt% or less of the balance. Herein, the balance includes sodium oxide, potassium oxide and iron oxide. GF2 has a tensile modulus of 83 to 87 GPa as determined for 17 μm-2400 tex roving strand according to ASTM D2343 and shows an aspect ratio of 1:1 (L/D, D: 10 to 11 μm).
* Heat resistant stabilizer: A masterbatch containing polyamide mixed with a first ether compound (PTMG 3000 available from Korea PTG and having an OH value of 37 mgKOH/g) and a second ether compound (dipentaerythritol (DPE) having an OH value of 1190 to 1320 mgKOH/g) is used. The first ether compound and the second ether compound are introduced at a weight ratio of 1:1 to 1:2.5, and the heat resistant stabilizer (masterbatch) includes 50 wt% to 90 wt% of polyamide based on 100 wt%.
* Other additives 1: LICOWAX-OP as lubricant, available from Clariant, and KI, CuI products as metallic stabilizers are used.
* Other additives 2: LICOWAX-OP as lubricant, available from Clariant, and the second ether compound (dipentaerythritol (DPE)) are used. A commercially available antioxidant or a stabilizer may be further used.

Each of the components was added according to the content as shown in Table 1, and melt kneading was carried out in a twin screw extruder heated to 250°C to 280°C to obtain a pellet-like resin composition. A screw type injector was used at an injection mold temperature of 80°C to 100°C to manufacture a specimen (thickness 4 mm, width 10 mm and length 170 mm).

<Test Example 1>

The characteristics of the specimen obtained as described above were determined as follows. The results are shown in Table 1.
* Tensile strength (MPa): Tensile strength was determined according to ISO 527 under the conditions of a line distance 50 mm, a test speed of 5.0 mm/min and a temperature of 23°C. A specimen having a tensile strength of 177 MPa or more was evaluated as having excellent mechanical rigidity.
* Tensile strength retention before and after aging (%): The tensile strength of a specimen before and after aging at 180°C for 1000 hours was determined based on ISO 527, and tensile strength retention was calculated according to the following Mathematical Formula 1, wherein a specimen having a tensile strength retention of 84% or more was evaluated as 'OK', and a specimen having a tensile strength retention of less than 84% was evaluated as 'NG':

Tensile strength retention before and after aging (%) = [Tensile strength after aging / Tensile strength before aging] X 100 [Mathematical Formula 1]

* Whitening test: A specimen was aged at 70°C under 62% RH for 4 weeks. When whitening occurred so that the specimen surface turned white, the specimen was evaluated as "0". When no whitening occurred, the specimen was evaluated as "X".

[Table 1]

| | | Examples | | | | | | | | | Comparative Examples | | | | | |
|---|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 | 6 |
| Compo sitio n (tota 1 100 wt%) | PA6-V | 25 | 27 | 14 | 28 | 17 | 40 | 14 | | 18 | 66 | 13 | 25 | 27 | 69 | 15 |
| | PA6-R2 | 34 | 31 | 41 | 21 | 21 | 21 | 51 | 61 | 51 | | 51 | 31 | 31 | | 51 |
| | PA6-R1 | 7 | 10 | 10 | 20 | 30 | | | | | | | 7 | 10 | | |
| | GF1 | 28 | 27 | 30 | 24 | 21 | 32 | 30 | 28 | 30 | | | | | | |
| | GF2 | | | | | | | | | | 33 | 30 | 30 | 27 | 30 | 33 |
| | Heat resistant stabilizer | 5 | 4 | 4 | 6 | 10 | 6 | 4 | 10 | | | 5 | 6 | 4 | | |
| | Other additives 1 | 1 | 1 | 1 | 1 | 1 | 1 | 1 | 1 | 1 | | 1 | 1 | 1 | 1 | |
| | Other additives 2 | | | | | | | | | | 1 | | | | | 1 |
| Evalu ation | Tensile strength (MPa) | 192 | 190 | 196 | 183 | 177 | 200 | 198 | 185 | 197 | 166 | 163 | 161 | 159 | 171 | 178 |
| | Tensile strength retention before and after aging (%) | OK | OK | OK | OK | OK | OK | OK | OK | OK | NG | OK | OK | OK | OK | OK |
| | Whitening | X | X | X | X | X | X | X | X | X | O | X | X | X | X | O |

As can be seen from Table 1, in the case of Examples including glass fibers having a tensile modulus of 88 GPa or more, the specimens show a high tensile strength, even though they include a regenerated polyamide resin. In addition, it can be seen that a heat resistant stabilizer including two or more types of ether compounds is used according to an exemplary embodiment of the present disclosure, and thus tensile strength is retained and no whitening occurs despite of thermal aging.

<Test Example 2>

The polyamide resin composition according to each of Examples 6 to 9 and Comparative Examples 5 and 6 was evaluated in terms of impact strength.

*Impact strength (kJ/m$^2$): Izod impact strength of a specimen having a dimension of 80 mm x 10 mm x 4 mm was determined according to TYPE A of ISO 180 (Plastics - Determination of Izod impact strength).

In addition, ultrasonic welding was carried out for the polyamide resin composition according to each of Examples 6 to 9 and Comparative Examples 5 and 6 by using Branson ultrasonic welding machine. A welded specimen was prepared by welding two planar specimens having a dimension of 40 mm x 80 mm x 3 mm under the condition set at a welding pressure of 1 bar, an amplitude of 1.5 mm and a welding depth of 1.0 mm. Then, the tensile strength of the welded specimen was determined, and the ratio of the strength of the welded specimen based on the tensile strength of the polyamide resin composition (parent material) before welding was calculated.

* Strength ratio: The welding strength was determined by drawing a welded specimen by using a universal testing machine (UTM) under the condition of a speed of 5 mm/min, a welding area of 120 mm$^2$, a load cell capacity of 5 kN or more, a test temperature of 23±2°C and a humidity of 50% RH. The ratio (strength ratio) of the welding strength of the welded specimen based on the tensile strength of the parent material determined in Test Example 1 was calculated. When the strength ratio was 20% or more, the specimen was evaluated as 'excellent'. When the strength ratio was

equal to or more than 10% and less than 20%, the specimen was evaluated as 'moderate'. In addition, when the strength ratio was less than 10%, the specimen was evaluated as 'poor'.

The composition according to each of Examples 6 to 9 and Comparative Examples 5 and 6 was processed, injection molded and subjected to ultrasonic welding to obtain a molded product of intake manifold. The molded product included a plurality of passages and holes. The burst pressure of a part of the molded product was evaluated as follows.
* Burst pressure of part: All passages and holes of a part subjected to ultrasonic welding was sealed completely, and then air or water was injected at one side to cause a gradual increase in internal pressure. Herein, the maximum pressure that can be endured by the part was determined. When the determined maximum pressure was 8.5 bar or more, the corresponding part was judged as 'pass'. When the maximum pressure was less than 8.5 bar, the part was judged as 'fail'.

[Table 2]

| | | Examples | | | | Comparative Examples | |
|---|---|---|---|---|---|---|---|
| | | 6 | 7 | 8 | 9 | 5 | 6 |
| Composition | Impact strength (kJ/m$^2$) | 15 | 17 | 16 | 15 | 13 | 14 |
| | Strength ratio of welded specimen | excellent | excellent | excellent | excellent | poor | moderate |
| Part | Burst pressure of part (≥ 8.5 bar) | Pass | Pass | Pass | Pass | Fail | Fail |

As can be seen from Table 2, in the case of Examples including glass fibers having a tensile modulus of 88 GPa or more, they show excellent strength even after welding. In addition, when they are applied to a part of vehicle, etc., they can endure high pressure to realize strong durability. The polyamide resin composition according to an exemplary embodiment of the present disclosure has welding strength and endurance reliability equal to or higher than a composition based on a chemically synthesized polyamide resin, not only in the form of a specimen (composition) but also in the unit of a product, despite of the use of a regenerated polyamide resin.

## Claims

**1.** A polyamide resin composition comprising:

a polyamide resin comprising at least one selected from the group consisting of a chemically synthesized polyamide resin and a regenerated polyamide resin; and
glass fibers having a tensile modulus of 88 GPa or more,
wherein the glass fibers comprise calcium oxide and magnesia in an amount of 17 wt% to 24 wt% (wherein calcium oxide content is 10 wt% or more, and magnesia content is 10 wt% or less), based on 100 wt% of the glass fibers.

**2.** The polyamide resin composition according to claim 1, wherein the polyamide resin comprises a chemically synthesized polyamide resin and a regenerated polyamide resin, and
the polyamide resin composition comprises 5 wt% to 60 wt% of the chemically synthesized polyamide resin and 10 wt% to 80 wt% of the regenerated polyamide resin, based on 100 wt% of the polyamide resin composition.

**3.** The polyamide resin composition according to claim 1,
wherein the regenerated polyamide resin comprises at least one selected from the group consisting of:

a first regenerated polyamide resin derived from a part of end-of-life vehicle; and
a second regenerated polyamide resin derived from at least one selected from the group consisting of a waste fishing net, a waste net, a rope and an air bag.

**4.** The polyamide resin composition according to claim 1,

wherein the regenerated polyamide resin comprises a first regenerated polyamide resin containing an inorganic filler, and
the first regenerated polyamide resin is contained in an amount of 1 wt% to 50 wt% based on 100 wt% of the polyamide resin composition.

**5.** The polyamide resin composition according to claim 4,

wherein the inorganic filler is at least one selected from the group consisting of glass fibers, talc, kaolin, wollastonite and carbon, and
the first regenerated polyamide resin comprises the inorganic filler in an amount of 27 wt% to 35 wt% based on 100 wt% of the first regenerated polyamide resin.

**6.** The polyamide resin composition according to claim 1,
which further comprises a heat resistant stabilizer containing two or more types of ether compounds.

**7.** The polyamide resin composition according to claim 6,
wherein the heat resistant stabilizer is a masterbatch containing the two or more types of ether compounds and a carrier polymer.

**8.** The polyamide resin composition according to claim 7,
wherein the carrier polymer is a polyamide.

**9.** The polyamide resin composition according to claim 6,
wherein the heat resistant stabilizer contains a first ether compound having an acid value of 35 mgKOH/g to 40 mgKOH/g, and a second ether compound having an acid value of 1190 mgKOH/g to 1320 mgKOH/g.

**10.** The polyamide resin composition according to claim 9,
wherein the weight ratio of the first ether compound and the second ether compound is 1:0.5 to 1:5.

**11.** The polyamide resin composition according to claim 6,
which comprises, based on 100 wt% of the polyamide resin composition:

50 wt% to 85 wt% of the polyamide resin;
10 wt% to 45 wt% of the glass fibers; and
1 wt% to 20 wt% of the heat resistant stabilizer.

**12.** The polyamide resin composition according to claim 1,
which has a tensile strength of 177 MPa or more.

**13.** A molded article comprising the polyamide resin composition as defined in any one of claims 1 to 12.

**14.** The molded article according to claim 13,
which is an automobile part or an electric/electronic component.

**15.** The molded article according to claim 13,
which is a highly heat resistant part for an automobile power train, or an intake manifold.

TRANSLATION

## INTERNATIONAL SEARCH REPORT

International application No. **PCT/KR2025/019279**

**A. CLASSIFICATION OF SUBJECT MATTER**

**C08L 77/00**(2006.01)i; **C08L 77/02**(2006.01)i; **C08K 7/14**(2006.01)i; **C08K 3/22**(2006.01)i; **C08K 3/013**(2018.01)i; **C08L 71/00**(2006.01)i; **C08K 5/06**(2006.01)i

According to International Patent Classification (IPC) or to both national classification and IPC

**B. FIELDS SEARCHED**

Minimum documentation searched (classification system followed by classification symbols)

C08L 77/00(2006.01); B29B 7/90(2006.01); C08K 3/013(2018.01); C08K 3/04(2006.01); C08K 5/053(2006.01); C08K 5/3465(2006.01); C08K 7/14(2006.01); C08L 63/00(2006.01); F41H 5/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 폴리아마이드 수지(polyamide resin), 재생(recycle), 유리 섬유(glass fiber), 인장 모듈러스(tensile modulus), 에테르(ether)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2679183 B1 (HANWHA COMPOUND CORPORATION) 28 June 2024 (2024-06-28)<br>claims 1-5; paragraphs [0009], [0010], [0021], [0053], [0055] | 1-15 |
| Y | KR 10-2021-0132145 A (BASF SE) 03 November 2021 (2021-11-03)<br>claims 1-13; paragraphs [0001], [0013], [0238] | 1-15 |
| Y | KR 10-2014-0054365 A (INVISTA TECHNOLOGIES S.À R.L.) 08 May 2014 (2014-05-08)<br>abstract; claims 1, 6, 7, 54, 62; paragraphs [0085], [0089] | 6-11 |
| A | US 9056786 B2 (PETERS, J. C. et al.) 16 June 2015 (2015-06-16)<br>claims 1-22 | 1-15 |
| A | KR 10-2284335 B1 (IRUCHEM CO., LTD.) 02 August 2021 (2021-08-02)<br>claims 1, 4-6 | 1-15 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **27 February 2026** | **03 March 2026** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

TRANSLATION

**INTERNATIONAL SEARCH REPORT**
**Information on patent family members**

International application No.
**PCT/KR2025/019279**

| Patent document cited in search report | | | Publication date (day/month/year) | Patent family member(s) | | | Publication date (day/month/year) |
|---|---|---|---|---|---|---|---|
| KR | 10-2679183 | B1 | 28 June 2024 | KR | 10-2023-0052424 | A | 20 April 2023 |
| KR | 10-2021-0132145 | A | 03 November 2021 | BR | 112021014885 | A2 | 05 October 2021 |
| | | | | CN | 113474402 | A | 01 October 2021 |
| | | | | CN | 113474402 | B | 27 October 2023 |
| | | | | EP | 3931247 | A1 | 05 January 2022 |
| | | | | JP | 2022-522673 | A | 20 April 2022 |
| | | | | JP | 7500592 | B2 | 17 June 2024 |
| | | | | KR | 10-2914280 | B1 | 16 January 2026 |
| | | | | US | 2022-0145046 | A1 | 12 May 2022 |
| | | | | WO | 2020-173766 | A1 | 03 September 2020 |
| KR | 10-2014-0054365 | A | 08 May 2014 | CN | 103890097 | A | 25 June 2014 |
| | | | | CN | 103890097 | B | 09 June 2017 |
| | | | | EP | 2742097 | A2 | 18 June 2014 |
| | | | | JP | 2014-525506 | A | 29 September 2014 |
| | | | | US | 2013-0228728 | A1 | 05 September 2013 |
| | | | | US | 9856365 | B2 | 02 January 2018 |
| | | | | WO | 2013-033287 | A2 | 07 March 2013 |
| | | | | WO | 2013-033287 | A3 | 27 June 2013 |
| US | 9056786 | B2 | 16 June 2015 | AU | 2007-333472 | A1 | 19 June 2008 |
| | | | | AU | 2007-333472 | B2 | 04 August 2011 |
| | | | | BR | PI0720311 | A2 | 04 December 2018 |
| | | | | CA | 2672222 | A1 | 19 June 2008 |
| | | | | CA | 2811273 | A1 | 22 March 2012 |
| | | | | CA | 2811360 | A1 | 14 March 2013 |
| | | | | CN | 101558019 | A | 14 October 2009 |
| | | | | CN | 101558019 | B | 11 January 2012 |
| | | | | CN | 102531401 | A | 04 July 2012 |
| | | | | CN | 102531401 | B | 22 August 2017 |
| | | | | CN | 103153894 | A | 12 June 2013 |
| | | | | CN | 103153895 | A | 12 June 2013 |
| | | | | CN | 103153896 | A | 12 June 2013 |
| | | | | EP | 2114837 | A1 | 11 November 2009 |
| | | | | EP | 2616399 | A1 | 24 July 2013 |
| | | | | EP | 2616400 | A1 | 24 July 2013 |
| | | | | EP | 2753589 | A1 | 16 July 2014 |
| | | | | IL | 199060 | A | 27 June 2013 |
| | | | | IL | 199060 | B | 27 June 2013 |
| | | | | IL | 225164 | A | 30 April 2013 |
| | | | | IL | 225165 | A | 30 April 2013 |
| | | | | JP | 2010-513187 | A | 30 April 2010 |
| | | | | JP | 2013-151416 | A | 08 August 2013 |
| | | | | JP | 2013-542904 | A | 28 November 2013 |
| | | | | JP | 2014-530162 | A | 17 November 2014 |
| | | | | JP | 2017-001950 | A | 05 January 2017 |
| | | | | JP | 5260544 | B2 | 14 August 2013 |
| | | | | JP | 5823425 | B2 | 25 November 2015 |
| | | | | JP | 6352186 | B2 | 04 July 2018 |
| | | | | KR | 10-1123526 | B1 | 12 March 2012 |
| | | | | KR | 10-2013-0100312 | A | 10 September 2013 |
| | | | | KR | 10-2014-0005876 | A | 15 January 2014 |

Form PCT/ISA/210 (patent family annex) (July 2022)

TRANSLATION

**INTERNATIONAL SEARCH REPORT**
**Information on patent family members**

International application No.
**PCT/KR2025/019279**

| Patent document cited in search report | Publication date (day/month/year) | Patent family member(s) | Publication date (day/month/year) |
|---|---|---|---|
| | | KR 10-2014-0074246 A | 17 June 2014 |
| | | MX 2009006198 A | 22 June 2009 |
| | | MX 2013002774 A | 28 May 2013 |
| | | MX 2013002775 A | 28 October 2013 |
| | | MX 2013002777 A | 28 October 2013 |
| | | RU 2009126780 A | 20 January 2011 |
| | | RU 2013116989 A | 20 October 2014 |
| | | RU 2013116990 A | 20 October 2014 |
| | | SG 177209 A1 | 30 January 2012 |
| | | TW 200837034 A | 16 September 2008 |
| | | TW 201217295 A | 01 May 2012 |
| | | TW 201223904 A | 16 June 2012 |
| | | TW 201224018 A | 16 June 2012 |
| | | TW 201307231 A | 16 February 2013 |
| | | TW 201317193 A | 01 May 2013 |
| | | TW 201811698 A | 01 April 2018 |
| | | TW I406831 B | 01 September 2013 |
| | | TW I408118 B | 11 September 2013 |
| | | TW I606988 B | 01 December 2017 |
| | | TW I662002 B | 11 June 2019 |
| | | US 10647610 B2 | 12 May 2020 |
| | | US 2008-0146430 A1 | 19 June 2008 |
| | | US 2011-0053755 A1 | 03 March 2011 |
| | | US 2012-0058878 A1 | 08 March 2012 |
| | | US 2012-0060678 A1 | 15 March 2012 |
| | | US 2012-0060679 A1 | 15 March 2012 |
| | | US 2012-0064788 A1 | 15 March 2012 |
| | | US 2014-0235424 A1 | 21 August 2014 |
| | | US 2016-0185655 A1 | 30 June 2016 |
| | | US 2016-0264453 A1 | 15 September 2016 |
| | | US 7829490 B2 | 09 November 2010 |
| | | US 8697590 B2 | 15 April 2014 |
| | | US 8697591 B2 | 15 April 2014 |
| | | US 9096462 B2 | 04 August 2015 |
| | | US 9156728 B2 | 13 October 2015 |
| | | US 9394196 B2 | 19 July 2016 |
| | | US 9598309 B2 | 21 March 2017 |
| | | WO 2008-073585 A1 | 19 June 2008 |
| | | WO 2012-037205 A1 | 22 March 2012 |
| | | WO 2012-037214 A1 | 22 March 2012 |
| | | WO 2012-037219 A1 | 22 March 2012 |
| | | WO 2013-036505 A1 | 14 March 2013 |
| | | ZA 200903698 B | 24 November 2010 |
| KR 10-2284335 B1 | 02 August 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240175496
- KR 1020250101287